# EUROPEAN PATENT APPLICATION

(11) **EP 3 021 513 A1**
(43) Date of publication of application: **18.05.2016**
(21) Application number: 15194911.2
(22) Date of filing: 17.11.2015
(51) Int. Cl.: H04L 5/00

(54) **APPARATUSES AND METHODS FOR LOGIC CHANNEL PRIORITIZATION**

(30) Priority: 17.11.2014 US 201462080635 P; 13.11.2015 US 201514940647
(71) Applicant: MediaTek, Inc, Hsin-Chu 300 (TW)
(72) Inventor: CHEN, Yu-Cheng, Jhubei City, Hsinchu County 302 (TW); WANG, Sheng-Chieh, Yonghe Dist., New Taipei City 234 (TW); PENG, Kuan-Jen, Zhongzheng Dist., Taipei City 100 (TW)
(74) Representative: 2K Patentanwälte Blasberg Kewitz & Reichel

(57) **Abstract**

A mobile communication device including a wireless transceiver and a controller is provided. The wireless transceiver performs wireless transmission and reception to and from a service network via a plurality of component carriers. The controller determines a plurality of service levels, each corresponding to a respective one of the component carriers, and allocates uplink resource assignments for uplink data transmissions according to the service levels and traffic type of the uplink data.

## Description

### CROSS REFERENCE TO RELATED APPLICATIONS

This Application claims priority of U.S. Provisional Application No. 62/080,635, filed on November 17, 2014, the entirety of which is incorporated by reference herein.

### BACKGROUND OF THE APPLICATION

### Field of the Application

The application generally relates to logic channel prioritization, and more particularly, to logic channel prioritization for multiple component carriers.

### Description of the Related Art

With growing demand for ubiquitous computing and networking, various cellular technologies have been developed, including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA2000) technology, Time Division-Synchronous Code Division Multiple Access (TD-SCDMA) technology, Worldwide Interoperability for Microwave Access (WiMAX) technology, Long Term Evolution (LTE) technology, Time- Division LTE (TD-LTE) technology, and LTE-Advanced (LTE-A) technology, etc.

Using the LTE technology in compliance with the 3GPP TS 36.321, release 9 specification as an example, a User Equipment (UE) supports only a single carrier transmission and reception. An LTE network may assign uplink resources on the signal component carrier for the UE to transmit uplink data, and the UE has to perform a logical channel prioritization procedure to properly allocate the uplink resource assignments for uplink data transmissions on the single component carrier according to the priority levels of each radio bearer and predetermined bucket size.

In order to meet the demand for higher data rates in wireless communications, support for wider transmission bandwidths is required, and the so-called Carrier Aggregation (CA) technique has been proposed to allow for the expansion of effective bandwidths delivered to a User Equipment (UE) through concurrent utilization of radio resources across multiple carriers. The CA technique is most useful when it is difficult to derive a contiguous and extra wide bandwidth. Using the CA technique, more than 2 frequency bands may be aggregated to form a larger transmission/reception bandwidth. Each of the aggregated frequency channels is generally referred to as a component carrier, which may be taken as a component of the aggregated bandwidth.

With the advancement from single-carrier transceiving to multiple-carrier transceiving, a UE may be assigned with uplink resources for each component carrier. Using the LTE-A technology in compliance with the 3GPP TS 36.321, release 10 specification as an example; when the UE is requested to transmit multiple Medium Access Control (MAC) Packet Data Units (PDUs) over several component carriers in one Transmission Time Interval (TTI), it may apply the same logical channel prioritization procedure as defined for the single carrier scenario to the uplink resource assignments of each component carrier independently, or to the sum of the uplink resource assignments of all component carriers.

### BRIEF SUMMARY OF THE APPLICATION

In an aspect of the application, a mobile communication device comprising a wireless transceiver and a controller is provided. The wireless transceiver is configured to perform wireless transmission and reception to and from a service network via a plurality of component carriers. The controller is configured to determine a plurality of service levels, each corresponding to a respective one of the component carriers, and allocate uplink resource assignments for uplink data transmissions according to the service levels and traffic type of the uplink data.

In another aspect of the application, a method for logic channel prioritization, which is executed by a mobile communication device wirelessly communicating with a service network via a plurality of component carriers, is provided. The method comprises the steps of: determining a plurality of service levels, each corresponding to a respective one of the component carriers; and allocating uplink resource assignments for uplink data transmissions according to the service levels and traffic type of the uplink data.

Other aspects and features of the present application will become apparent to those with ordinarily skill in the art upon review of the following descriptions of specific embodiments of the mobile communication devices and the methods for logic channel prioritization.

### BRIEF DESCRIPTION OF DRAWINGS

The application can be more fully understood by reading the subsequent detailed description and examples with references made to the accompanying drawings, wherein:
Fig. 1 is a block diagram of a wireless communication environment according to an embodiment of the invention;
Fig. 2 is a block diagram illustrating the mobile communication device 110 according to an embodiment of the application;
Fig. 3 is a schematic diagram illustrating an exemplary frequency spectrum of the LTE-A technology;
Fig. 4 is a flow chart illustrating the method for logic channel prioritization according to an embodiment of the application; and
Figs. 5A and 5B show a schematic diagram illustrating the logic channel prioritization according to the example of Table 1.

### DETAILED DESCRIPTION OF THE APPLICATION

The following description is made for the purpose of illustrating the general principles of the application and should not be taken in a limiting sense. It should be understood that the embodiments may be realized in software, hardware, firmware, or any combination thereof. The 3GPP specifications are used to teach the spirit of the application, and the application is not limited thereto.

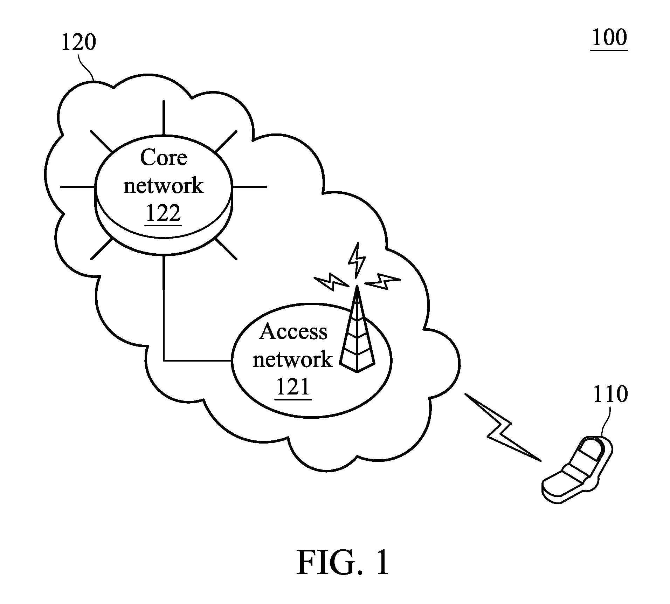

Fig. 1 is a block diagram of a wireless communication environment according to an embodiment of the invention. The wireless communication environment 100 comprises a mobile communication device 110 and a service network 120, wherein the mobile communication device 110 supports multiple component carriers and is wirelessly connected to the service network 120 for obtaining mobile services. The mobile communication device 110 may be a feature phone, a smartphone, a panel Personal Computer (PC), a laptop computer, or any computing device supporting the wireless technology utilized by the service network 120. The service network 120 may be a cellular network supporting multiple component carriers, such as an LTE-A network.

Specifically, the service network 120 comprises an access network 121 and a core network 122, wherein the access network 121 is responsible for processing radio signals, terminating radio protocols, and connecting the mobile communication device 110 with the core network 122, while the core network 122 is responsible for performing mobility management, network-side authentication, and interfaces with public/external networks (e.g., the Internet). Each of the access network 121 and the core network 122 may comprise one or more network nodes for carrying out said functions. For example, if the service network 120 is an LTE-A network, the access network 121 may be an Evolved-UTRAN (E-UTRAN) which includes at least an evolved NB (eNB) (e.g., a home eNB, macro BS, or pico BS), and the core network 122 may be an Evolved Packet Core (EPC) which includes a Home Subscriber Server (HSS), Mobility Management Entity (MME), Serving Gateway (S-GW), and Packet Data Network Gateway (PDN-GW or P-GW).

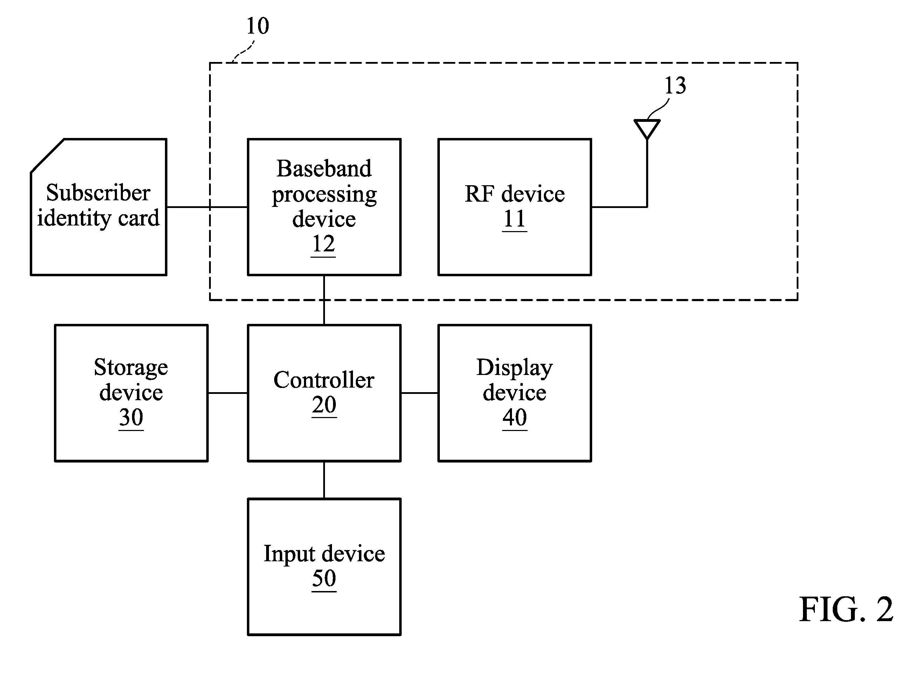

Fig. 2 is a block diagram illustrating the mobile communication device 110 according to an embodiment of the application. The mobile communication device 110 comprises a wireless transceiver 10, a controller 20, a storage device 30, a display device 40, and an input device 50. The wireless transceiver 10 is configured to perform wireless transmission and reception to and from the service networks 120 and 130. The wireless transceiver 10 comprises a Radio Frequency (RF) device 11, a baseband processing device 12, and an antenna 13. The baseband processing device 12 is configured to perform baseband signal processing and control the communications between subscriber identity card(s) (not shown) and the RF device 11. The baseband processing device 12 may contain multiple hardware components to perform the baseband signal processing, including Analog-to-Digital Conversion (ADC)/Digital-to-Analog Conversion (DAC), gain adjusting, modulation/demodulation, encoding/decoding, and so on. The RF device 11 may receive RF wireless signals via the antenna 13, convert the received RF wireless signals to baseband signals, which are processed by the baseband processing device 12, or receive baseband signals from the baseband processing device 12 and convert the received baseband signals to RF wireless signals, which are later transmitted via the antenna 13. The RF device 11 may also contain multiple hardware devices to perform radio frequency conversion. For example, the RF device 10 may comprise a mixer to multiply the baseband signals with a carrier oscillated in the radio frequency of the supported cellular technologies, wherein the radio frequency may be 900MHz, 2100MHz, or 2.6GHz utilized in LTE-A technology, or another radio frequency, depending on the cellular technology in use.

The controller 20 may be a general-purpose processor, a Micro Control Unit (MCU), an application processor, a Digital Signal Processor (DSP), or the like, for controlling the wireless transceiver 10 for wireless communications with the service networks 120 and 130, storing and retrieving data to and from the storage device 30, sending a series of frame data (e.g. representing text messages, graphics, images, etc.) to the display device 40, receiving signals from the input device 50. In particular, the controller 20 coordinates the aforementioned operations of the wireless transceiver 10, the storage device 30, the display device 40, and the input device 50 for performing the method for logic channel prioritization.

In another embodiment, the controller 20 may be incorporated into the baseband processing device 12, serving as a baseband processor.

The storage device 30 may be a memory, such as a FLASH memory or a Non-volatile Random Access Memory (NVRAM), or a magnetic storage device, such as a hard disk or a magnetic tape, or an optical disc, or any combination thereof for storing cell information of legacy networks (e.g., the service network 130) and instructions and/or program code of applications and/or communication protocols.

The display device 40 may be a Liquid-Crystal Display (LCD), Light-Emitting Diode (LED) display, or Electronic Paper Display (EPD), etc., for providing a display function. Alternatively, the display device 30 may further comprise one or more touch sensors disposed thereon or thereunder for sensing touches, contacts, or approximations of objects, such as fingers or styluses.

The input device 50 may comprise one or more buttons, a keyboard, a mouse, a touch pad, a video camera, a microphone, and/or a speaker, etc., serving as the Man-Machine Interface (MMI) for interaction with users.

It should be understood that the components described in the embodiment of Fig. 2 are for illustrative purposes only and are not intended to limit the scope of the application.

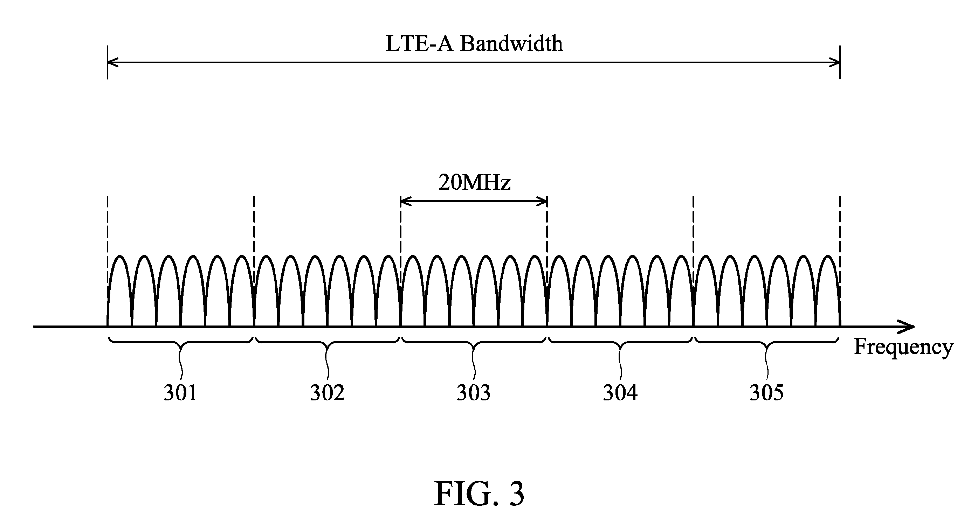

Fig. 3 is a schematic diagram illustrating an exemplary frequency spectrum of the LTE-A technology. As shown in Fig. 3, five carriers are shown (denoted with reference numerals 301, 302, 303, 304, and 305), each having a bandwidth of 20 MHz. As will be appreciated by those skilled in the art, the system and method of the present application is not limited to having 5 uplink component carriers, and more or fewer component carriers can be used in a particular system. In addition, the present application is not meant to be limited to a bandwidth of 20 MHz for each component carrier, and a greater or lesser bandwidth allocation is possible.

In the example of Fig. 3, when multiple component carriers are configured, the minimum uplink bandwidth will be 40 MHz if two of the 5 component carriers with 20 MHz are aggregated, and the maximum uplink bandwidth will be 100 MHz if all of the 5 component carriers with 20 MHz are aggregated. As will be appreciated by those skilled in the art, dependent on the deployment scenario, carrier aggregation may occur with component carriers located in the same frequency band or certain carriers may be located in non-adjacent or non-contiguous frequency bands. For example, one carrier may be located in the 2.6 GHz frequency band and a second non-adjacent aggregated carrier may be located at the 900 MHz frequency band.

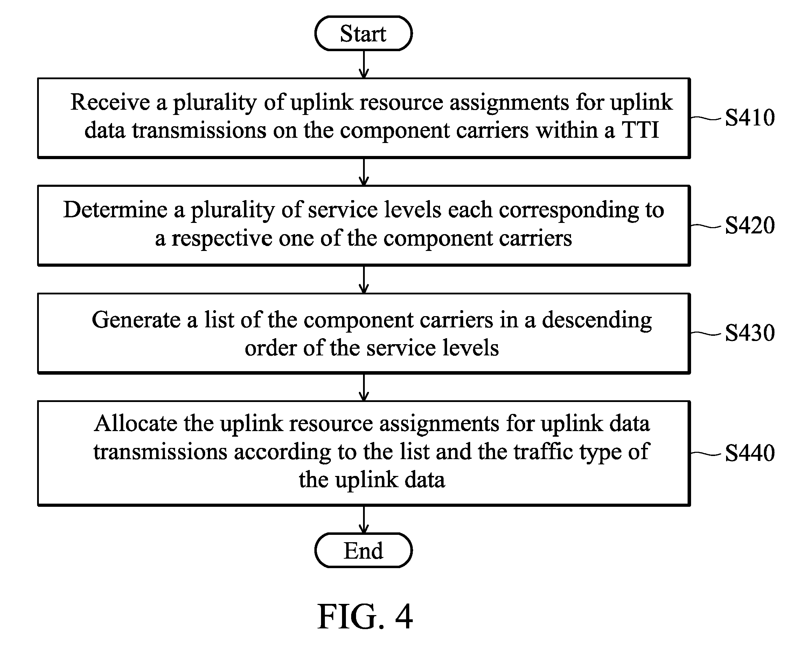

Fig. 4 is a flow chart illustrating the method for logic channel prioritization according to an embodiment of the application. In this embodiment, the method for logic channel prioritization is executed by a mobile communication device, e.g., the mobile communication device 110, which is configured to perform wireless transceiving with a service network via a plurality of component carriers. To begin, the mobile communication device receives a plurality of uplink resource assignments for uplink data transmissions on the component carriers within a TTI (step S410). That is, each uplink resource assignment is dedicated for uplink data transmissions on a respective component carrier. Next, the mobile communication device determines a plurality of service levels, each corresponding to a respective one of the component carriers (step S420).

Specifically, each service level is determined according to a signal quality indicator of the corresponding component carrier, channel feedbacks of the corresponding component carrier, and/or a configuration of the uplink resource assignments of the corresponding component carrier.

The signal quality indicator may be a Received Signal Strength Indication (RSSI), Signal to Noise Ratio (SNR), Adjacent Channel Interference (ACI), Packet Error Rate (PER), Bit Error Rate (BER), BLock Error Rate (BLER), Channel Quality Indicator (CQI), or a Rank Indicator (RI). For example, the greater value of the RSSI, SNR, CQI, or RI, the higher service level of the corresponding component carrier. Likewise, the smaller value of the ACI, PER, BER, BLER, the higher service level of the corresponding component carrier. It should be understood that the signal quality indicators described herein are for illustrative purposes only and are not intended to limit the scope of the application.

The channel feedbacks may be an Automatic Repeat reQuest (ARQ) Acknowledgement (ACK) or Non-ACK (NACK), or a Hybrid ARQ (HARQ) ACK or NACK. For example, the ratio of the number of received HARQ ACK/NACK or ACQ ACK/NACK may be used as a factor for determining the service level of the corresponding component carrier, and the greater the ratio of the channel feedbacks, the higher service level of the corresponding component carrier.

The configuration of the uplink resource assignments may include a resource block size, an operating frequency, or a transmission power/power headroom configured for the uplink resource assignments of the corresponding component carrier. For example, the component carrier operating on 700 MHz may be expected to have a better service level than the component carrier operating on 2.5 GHz, due to the fact the 700 MHz signals have a better ability to penetrate walls while the 2.5 GHz signals may be more likely to be interfered with by the close-band 2.4 GHz operating frequency of the Wireless Fidelity (WiFi) technology. Alternatively, a component carrier configured to use a greater transmission power or power headroom may be expected to have a better service level, or a component carrier configured with a greater resource block size may be expected to have a better service level.

An exemplary table for determining the service level for each component carrier is shown below in Table 1.

**Table 1.**

| Index of component carrier | RSSI | HARQ ACK/NACK | Operating frequency | Service level |
|---|---|---|---|---|
| CC#1 | -45 dBm | 10/4 | 2.5 GHz | 2 |
| CC#2 | -40 dBm | 10/2 | 700 MHz | 1 |

In this example, two component carriers are configured for uplink data transmissions, and the signal quality indicator is RSSI, the channel feedbacks are HARQ ACK and NACK, and the configuration of the uplink resource assignment is operating frequency. The service levels of the component carriers may be determined based on any combination of the RSSI, the ratio of HARQ ACK/NACK, and the configuration of the uplink resource assignment. For example, the RSSI is used as the first reference, and the ratio of HARQ ACK/NACK is used as the second reference if both the component carriers have the same RSSI, and the configuration of the uplink resource assignment is used as the third reference if both the component carriers have the same ratio of HARQ ACK/NACK. Alternatively, the RSSI, the ratio of HARQ ACK/NACK, and the configuration of the uplink resource assignment may be given different weights, and each value of the RSSI, the ratio of HARQ ACK/NACK, and the configuration of the uplink resource assignment is multiplied by the respective weight to generate a weighted sum for determining the service levels.

Subsequent to step S420, the mobile communication device generates a list of the component carriers in a descending order of the service levels (step S430), and allocates the uplink resource assignments for uplink data transmissions according to the list and the traffic type of the uplink data (step S440). Specifically, the mobile communication device prioritizes the allocation of the uplink resource assignments with the component carriers from the top of the list to important uplink data with the traffic type indicating a Non Access Stratum (NAS) or Radio Resource Control (RRC) message, an Acknowledgements of a Downlink Transmission Control Protocol (TCP) transmission, Voice over Long Term Evolution (VoLTE) or Video over LTE (ViLTE) data, or a channel feedback (e.g., ARQ ACKs).

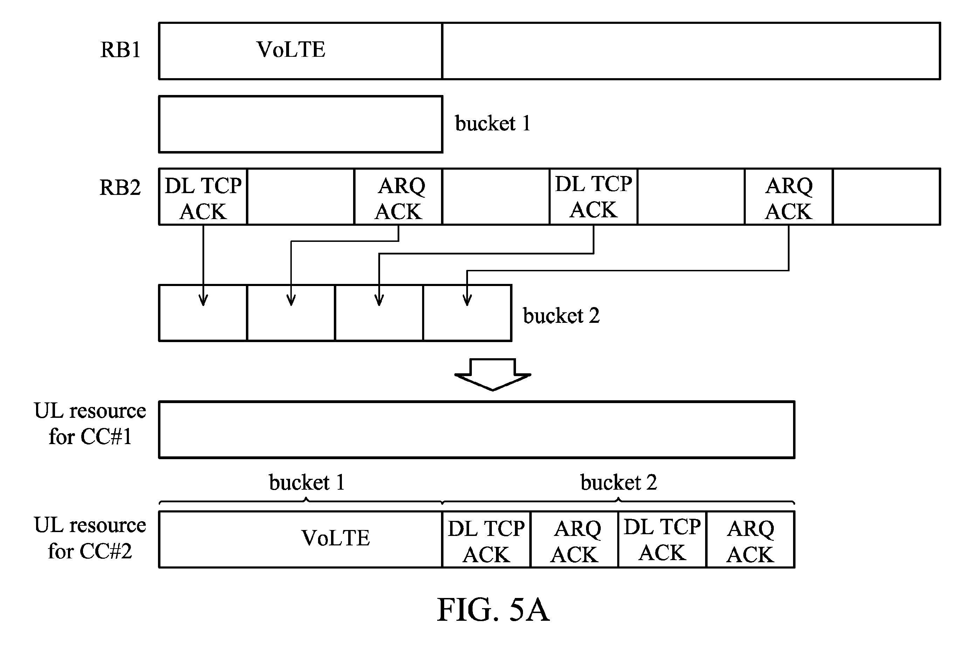

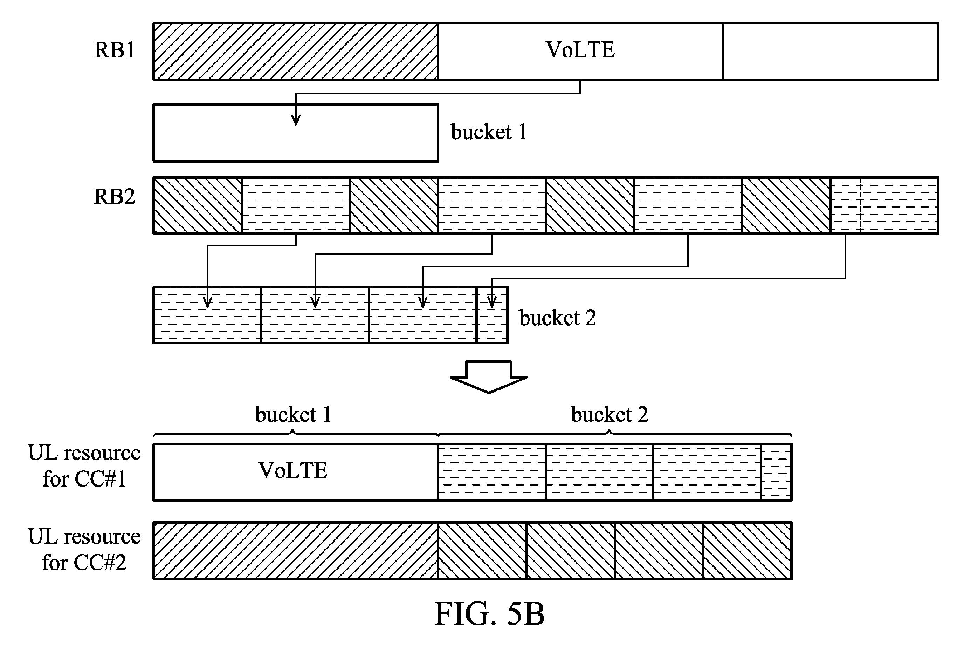

Figs. 5A and 5B show a schematic diagram illustrating the logic channel prioritization according to the example of Table 1. As shown in Fig. 5A, the uplink data to be transmitted is received per Radio Bearer (RB). Specifically, RB1 is configured to carry the VoLTE data, and thus has a higher priority; while RB2 is configured to carry general data (including ACKs of DL TCP, ARQ ACKs, and other data packets), and thus has a lower priority. Each RB has a respective bucket size determined in the first place when the RB is established. It should be noted that the important data is prioritized to be placed into the corresponding bucket for each RB. That is, the VoLTE data for RB1 is placed into bucket 1, and the ACKs of DL TCP and ARQ ACKs for RB2 are placed into bucket 2.

As the service level of the second component carrier (denoted as CC#2) is higher than that of the first component carrier (denoted as CC#1), the uplink resource assignments for the second component carrier are first allocated to the uplink data placed in buckets 1 and 2.

After that, as shown in Fig. 5B, the subsequent VoLTE data for RB1 is placed into bucket 1, and the other data packets for RB2 are placed into bucket 2. Since the uplink resource assignments for the second component carrier have been allocated, the process proceeds to allocate the uplink resource assignments for the first component carrier to the uplink data placed in buckets 1 and 2.

Although the examples shown in Figs. 5A and 5B apply the logic channel prioritization to each uplink resource assignment independently, it should be appreciated by those skilled in the art that the logic channel prioritization may be applied to the sum of the capacities of all uplink resource assignments.

It should be noted that, after prioritizing the important data to be transmitted using the uplink resource assignment corresponding to the component carrier with a higher service level, the conventional scheduling based on the priority level of each radio bearer may be used instead.

In view of the forgoing embodiment of Figs. 4, 5A, and 5B, it will be appreciated that the present application realizes enhanced logical channel prioritization by arranging important uplink data to be transmitted using the uplink resource assignment corresponding to the component carrier with a higher service level. Advantageously, this improves the transmission performance, especially when the service levels of the multiple component carriers vary greatly from one another.

Other detailed descriptions of the logical channel prioritization procedure are omitted herein for brevity since it is beyond the scope of the application, and reference may be made to the 3GPP TS 36.321, release 10/11/12.

While the application has been described by way of example and in terms of preferred embodiment, it should be understood that the application is not limited thereto. Those who are skilled in this technology can still make various alterations and modifications without departing from the scope and spirit of this application. For example, the method for logical channel prioritization may be applied in any future evolution of the LTE-A technology. Therefore, the scope of the present application shall be defined and protected by the following claims and their equivalents.

## Claims

1. A mobile communication device (110), comprising:
a wireless transceiver (10), configured to perform wireless transmission and reception to and from a service network (120) via a plurality of component carriers; and
a controller (20), configured to determine a plurality of service levels, each corresponding to a respective one of the component carriers, and allocate uplink resource assignments for uplink data transmissions according to the service levels and traffic type of the uplink data.

2. The mobile communication device of claim 1, wherein the controller is further configured to generate a list of the component carriers in a descending order of the service levels, and prioritize the allocation of the uplink resource assignments with the component carriers from the top of the list to the uplink data with the traffic type indicating that the uplink data comprises a Non Access Stratum, NAS, or Radio Resource Control, RRC, message, an Acknowledgement of a Downlink Transmission Control Protocol, TCP, transmission, Voice over Long Term Evolution, VoLTE, or Video over LTE, ViLTE, data, or a channel feedback.

3. The mobile communication device of claim 1 or 2, wherein each of the service levels is determined according to any combination of the following:
a signal quality indicator of the corresponding component carrier;
channel feedbacks of the corresponding component carrier; and
a configuration of the uplink resource assignments of the corresponding component carrier.

4. The mobile communication device of claim 3, wherein the signal quality indicator is a Received Signal Strength Indication, RSSI, Signal to Noise Ratio, SNR, Adjacent Channel Interference, ACI, Packet Error Rate, PER, Bit Error Rate, BER, BLock Error Rate, BLER, Channel Quality Indicator, CQI, or a Rank Indicator, RI.

5. The mobile communication device of claim 3 or 4, wherein the channel feedback is an Automatic Repeat request, ARQ, Acknowledgement, ACK, or Non-ACK, NACK, or a Hybrid ARQ,(HARQ ACK or NACK.

6. The mobile communication device of any of the claims 3 to 5, wherein the configuration of the uplink resource assignments comprises a resource block size, an operating frequency, a transmission power, or a power headroom configured for the uplink resource assignments of the corresponding component carrier.

7. The mobile communication device of any of the claims 1 to 6, wherein the controller is further configured to allocate the uplink resource assignments for the uplink data transmissions according to priority levels of a plurality of radio bearers which the uplink data is associated with.

8. A method for logic channel prioritization, which is executed by a mobile communication device wirelessly communicating with a service network via a plurality of component carriers, the method comprising:
determining a plurality of service levels, each corresponding to a respective one of the component carriers; and
allocating uplink resource assignments for uplink data transmissions according to the service levels and traffic type of the uplink data.

9. The method of claim 8, further comprising:
generating a list of the component carriers in a descending order of the service levels; and
prioritizing the allocation of the uplink resource assignments with the component carriers from the top of the list to the uplink data with the traffic type indicating that the uplink data comprises a Non Access Stratum, NAS, or Radio Resource Control, RRC, message, an Acknowledgement of a Downlink Transmission Control Protocol, TCP, transmission, Voice over Long Term Evolution, VoLTE, or Video over LTE, ViLTE, data, or a channel feedback.

10. The method of claim 8 or 9, wherein each of the service levels is determined according to any combination of the following:
a signal quality indicator of the corresponding component carrier;
channel feedbacks of the corresponding component carrier; and
a configuration of the uplink resource assignments of the corresponding component carrier.

11. The method of claim 10, wherein the signal quality indicator is a Received Signal Strength Indication, RSSI, Signal to Noise Ratio, SNR, Adjacent Channel Interference, ACI, Packet Error Rate, PER, Bit Error Rate ,BER, BLock Error Rate ,BLER, Channel Quality Indicator ,CQI, or a Rank Indicator, RI.

12. The method of claim 10, wherein the channel feedback is an Automatic Repeat reQuest, ARQ, Acknowledgement, ACK, or Non-ACK, NACK, or a Hybrid ARQ, HARQ, ACK or NACK.

13. The method of claim 10, 11 or 12, wherein the configuration of the uplink resource assignments comprises a resource block size, an operating frequency, a transmission power, or a power headroom configured for the uplink resource assignments of the corresponding component carrier.

14. The method of any of the claims 8 to 13, further comprising:
allocating the uplink resource assignments for the uplink data transmissions according to priority levels of a plurality of radio bearers which the uplink data is associated with.
